(19) Europäisches Patentamt
European Patent Office
Office européen des brevets

(11) **EP 3 631 252 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **18709976.7**

(22) Anmeldetag: **01.03.2018**

(51) Internationale Patentklassifikation (IPC):
*F16J 3/04* *(2006.01)*   *B60G 11/27* *(2006.01)*
*F16J 12/00* *(2006.01)*   *F16F 9/04* *(2006.01)*

(52) Gemeinsame Patentklassifikation (CPC):
**F16J 3/041; B60G 11/27; F16F 9/0409;**
**F16J 12/00;** B60G 2204/4702

(86) Internationale Anmeldenummer:
**PCT/EP2018/054998**

(87) Internationale Veröffentlichungsnummer:
**WO 2018/219507 (06.12.2018 Gazette 2018/49)**

(54) **HUBBALG**

LIFTING BELLOWS

SOUFFLET DE LEVAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2017 DE 102017209038**

(43) Veröffentlichungstag der Anmeldung:
**08.04.2020 Patentblatt 2020/15**

(73) Patentinhaber: **ContiTech Luftfedersysteme GmbH**
**30165 Hannover (DE)**

(72) Erfinder: **BOONPHUPONTONTI, Atipong**
**37154 Northeim (DE)**

(74) Vertreter: **Continental Corporation**
**c/o Continental AG**
**Intellectual Property**
**Postfach 169**
**30001 Hannover (DE)**

(56) Entgegenhaltungen:
EP-A2- 0 262 080       US-A- 4 763 883
US-A- 5 286 010       US-A- 5 975 506
US-A1- 2004 041 313

**Beschreibung**

Die Erfindung betrifft einen Hubbalg, beispielsweise für Achsanhebevorrichtungen von Fahrzeugen.

Hubbälge aus Elastomermaterial sind an sich bekannt und im Einsatz. Sie finden Verwendung bei Maschinen- oder Fundamentlagerungen zum Ausgleich von Höhendifferenzen oder in Fahrzeugen, insbesondere Nutzfahrzeugen zum Anheben von Achsen, die zeitweilig nicht benötigt werden.

Hubbälge nach dem Stand der Technik sind meist entweder als Rollbalg analog zu einer Rollbalgluftfeder oder häufig als Faltenbalg mit einer oder mehreren Falten ausgebildet.

In der DE 88 16 538 U1 ist eine Achsanhebevorrichtung offenbart, bei der der Hubbalg in beiden Ausführungsformen offenbart ist.

Die genannten Ausführungsformen sind beide relativ aufwendig, da zum einen viele Bauteile wie Bördelplatten oder Abrollkolben notwendig sind, zum anderen ist auch die Herstellung der Bälge selbst kostenintensiv, da bei der Herstellung meist aus Metall Wulstkerne notwendig sind, die bei der Produktion separat beschafft und in die Werkzeuge eingelegt werden müssen. Die genannten Hubbälge sind außerdem recht schwer.

Der Erfindung liegt die Aufgabe zugrunde, einen Hubbalg zu schaffen, der leicht ist, einfach aufgebaut ist und preiswert produzierbar ist.

Diese Aufgabe wird dadurch gelöst, dass der Hubbalg mindestens einen schlauchförmigen elastomeren Grundkörper mit einer elastomeren Matrix und in die elastomere Matrix eingebetteten Festigkeitsträger, zwei Abschlussdeckel und zwei Spannelemente aufweist, wobei der Festigkeitsträger des Grundkörpers aus mindestens zwei Fadenlagen aufgebaut ist, wobei jede Fadenlage in unbelastet Zustand in einem Wickelwinkel bezüglich der Umfangsrichtung angeordnet ist, dessen Betrag kleiner als 35,3° ist, wobei beide Wickelwinkel nahezu denselben Betrag aber unterschiedlich Vorzeichen haben und dass die Abschlussdeckel beidendig jeweils mit dem Grundkörper mittels der Spannelemente luftdicht verbunden sind.

Da die Wickelwinkel der Fadenlagen jeweils den gleichen Betrag, aber unterschiedliche Vorzeichen aufweisen, ergibt sich daraus im fertigen Balg ein Fadenwinkel zwischen beiden Fadenlagen, der den doppelten Betrag des jeweiligen Wickelwinkels aufweist. Dementsprechend liegt hier der Betrag des erfindungsgemäßen Fadenwinkels bei 2x35,3°. Der Fadenwinkel weist also einen Betrag kleiner als 70,6° auf.

Wird ein derartiger Balg bei 35,3° Wickelwinkel mit Druckluft beaufschlagt, halten sich die Kräfte, die auf die Deckel wirken, mit den Kräften, die von der Balgwand aufgenommen werden, die Waage, es herrscht ein Kräftegleichgewicht. Dies ist also der neutrale Winkel, den ein entsprechender Balg unter Innendruck anstreben wird. Ist der Wickelwinkel des unbelasteten Balges kleiner als 35,3°, wird sich der Balg folglich zur Erreichung dieses Winkels längen müssen.

Ein derartiger Balg ist also geeignet, Lasten zu heben. Da nur wenige und leicht herzustellende einfache Bauteile erforderlich sind, ist ein derartiger Hubbalg kostengünstig herstellbar und weist nur ein relativ geringes Gewicht auf.

In einer Weiterbildung der Erfindung weist der Betrag des Wickelwinkels einen Wert kleiner als 27,5° auf.

In einer Weiterbildung der Erfindung weist der Betrag des Wickelwinkels einen Wert kleiner oder gleich 20° auf.

Je kleiner der Wickelwinkel und damit der Fadenwinkel ist, desto größer wird die Längung des Hubbalges unter Last ausfallen. Damit sind auch höhere Hubwege erreichbar.

Anhand der Zeichnung wird nachstehend ein Beispiel der Erfindung näher erläutert. Es zeigt

Fig. 1     einen erfindungsgemäßen Hubbalg in einem Teillängsschnitt in unbelastetem Zustand,

Fig. 2     eine Prinzipdarstellung zum Unterschied zwischen Wickelwinkel und Fadenwinkel,

Fig. 3     den erfindungsgemäßen Hubbalg in einer Prinzipskizze mit Druckbeaufschlagung und

Fig. 4     zwei Diagramme von Hubkraft-Hubweg-Verläufen erfindungsgemäßer Hubbälge.

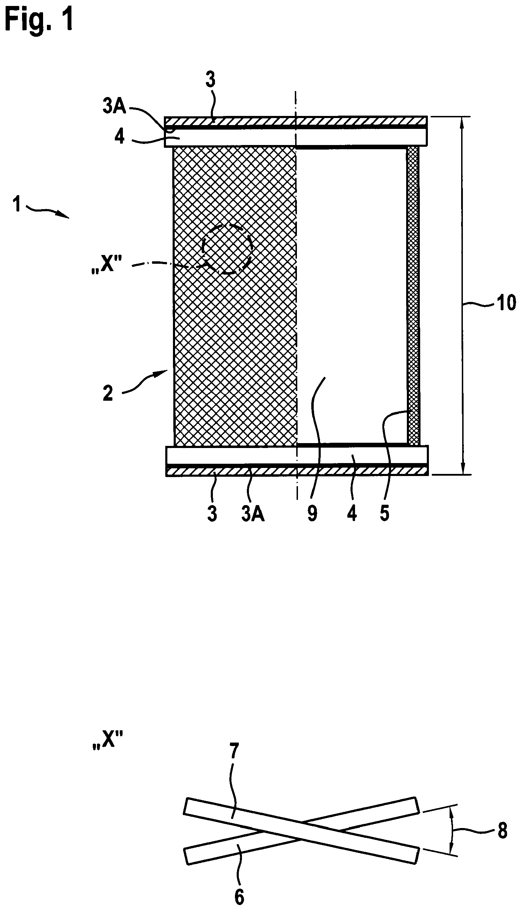

Die Fig. 1 zeigt einen erfindungsgemäßen Hubbalg 1 in einer teilweise aufgeschnittenen Darstellung. Der Hubbalg 1 weist einen elastomeren Grundkörper 2 auf. Der Grundkörper 2 ist jeweils endseitig mit je einem Abschlussdeckel 3 aus Kunststoff verschlossen, wobei der Kunststoffdeckel 3 mit je einem Absatz 3A in den Grundkörper 2 eingesteckt ist. Der Grundkörper 2 ist mit jeweils einem Spannring 4 auf dem Absatz 3A des Kunststoffdeckels 3 festgespannt. Der Grundkörper 2 weist eine Wand 5 auf, die hier als Schnitt auf der rechten Hälfte der Figur 1 dargestellt ist. Die Wand 5 weist eine nicht näher dargestellte Elastomermatrix auf, in die ein Festigkeitsträger eingebettet ist.

Der Festigkeitsträger ist in einer Detailvergrößerung "X" näher gezeigt. Er besteht aus zwei Fadenlagen 6 und 7, von denen in der Detailvergrößerung "X" jeweils nur ein Faden 6 und ein Faden 7 und die umgebende Elastomermatrix nicht gezeigt sind. Die Fadenlagen 6 und 7 kreuzen sich in Umfangsrichtung des Grundkörpers 2 gesehen in einem Fadenwinkel 8, der in dieser Darstellung nicht maßstabsgerecht dargestellt ist. Der Fadenwinkel 8 ist kleiner als 2 x 35,3°. Das durch die Abschlussdeckel 3 luftdicht verschlossene Innenvolumen 9 des Hubbalges 1 ist durch einen nicht gezeigten Luftanschluss mit Druckluft beaufschlagbar. In drucklosen Zustand weist der Hubbalg eine Höhe 10 auf.

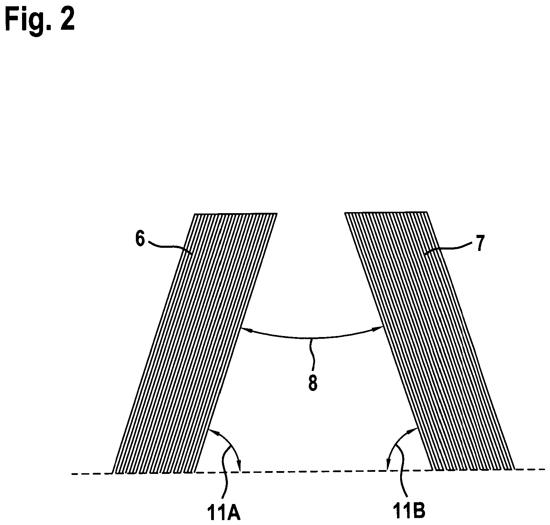

Fig. 2 zeigt zur prinzipiellen Verdeutlichung des Zusammenhangs zwischen Wickelwinkel und Fadenwinkel 8 die Fadenlagen 6 und 7 in einer Zusammenschau. Zur besseren Übersicht sind Kreuzungen der Fadenlagen 6, 7 nicht gezeigt. Die Fadenlage 6 weist zur Umfangsrichtung einen Wickelwinkel 11A, die Fadenlage 7 einen Wickelwinkel 11B auf. Die Wickelwinkel 11A, 11B sind dem Betrag nach gleich, im Vorzeichen aber verschieden, so dass gilt

$$11A = -11B$$

und

$$|11A| = |11B|.$$

Dementsprechend resultiert im vorliegenden Beispiel ein Fadenwinkel 8 kleiner als

$$|11A| + |11B| = 70,6°$$

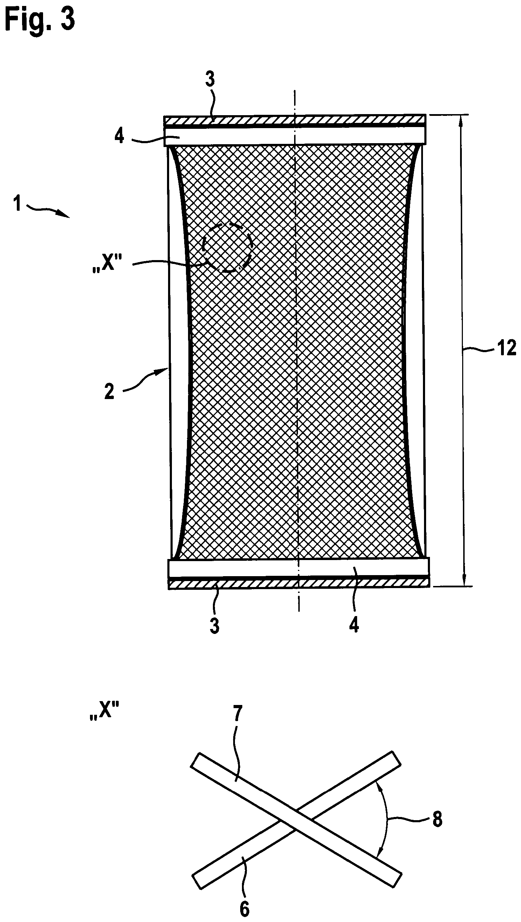

Die Fig. 3 zeigt den erfindungsgemäßen Hubbalg 1 in einem mit Druckluft beaufschlagten Innenvolumen. Das Innenvolumen ist hier nicht explizit dargestellt. Auch hier sind die Fadenlagen 6 und 7 durch jeweils einen Faden 6 und einen Faden 7 repräsentiert und in der Detailvergrößerung "X" näher gezeigt. Die Elastomermatrix ist nicht explizit dargestellt.

Der Fadenwinkel 8 strebt bei Druckbeaufschlagung des Grundkörpers 2 den neutralen Winkel von 2 x 35,3° an. Da der Fadenwinkel 8 in unbelastetem Zustand einen Wert kleiner als 2 x 35,3° aufweist, wird bei Druckbeaufschlagung der Fadenwinkel 8 vergrößert. Dies führt dazu, dass gegenüber dem drucklosen Zustand die Höhe 12 des Balges vergrößert ist. Diese Verlängerung des Hubbalges 1 ist als Hub in einer entsprechenden, hier nicht gezeigten Vorrichtung nutzbar.

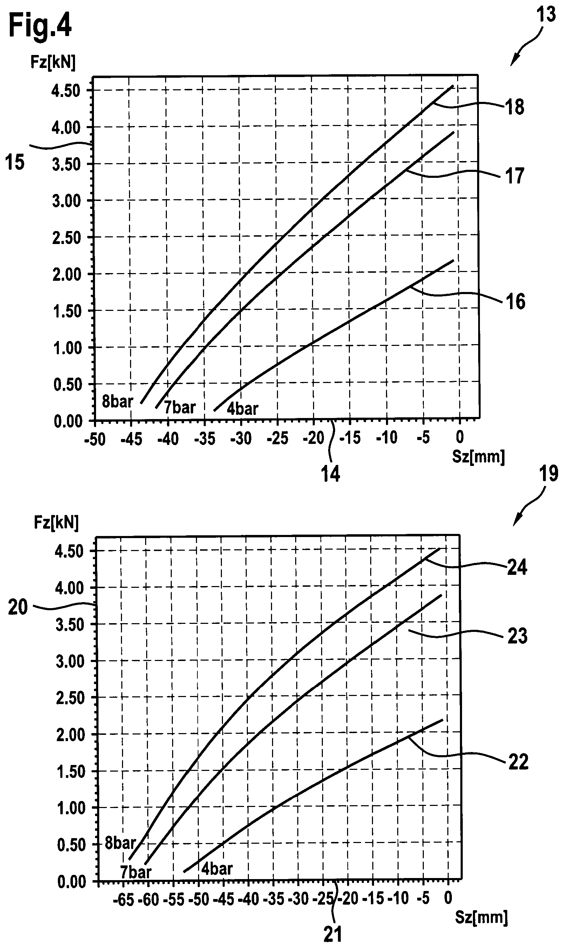

In Fig. 4 sind zwei Diagramme 13 und 19 von Hubkraft-Hubweg-Verläufen erfindungsgemäßer Hubbälge gezeigt.

Das Diagramm 13 zeigt für einen erfindungsgemäßen Hubbalg mit einer Ausgangshöhe von 100 mm und einem Wickelwinkel von 27,5° in Abhängigkeit vom Innendruck die erreichbaren Endhöhen. Die Achse 14 des Diagramms 13 repräsentierte die Verlängerung in mm, die Achse 15 die Tragkraft in kN.

Die Kurve 16 zeigt den Hubkraft-Hubweg-Verlauf bei einem Innendruck von 4 bar. Hier ist eine maximale Verlängerung von etwa 34 mm erreichbar, wobei die Tragkraft bei maximaler Verlängerung auf einen Wert nahe Null absinkt.

Die Kurve 17 zeigt den Hubkraft-Hubweg-Verlauf bei 7 bar mit einer maximalen Verlängerung von etwa 42mm und Kurve 18 den Verlauf bei 8 bar mit maximaler Verlängerung von etwa 44 mm.

In Diagramm 19 mit Achse 20 für die Verlängerung in Millimetern und Achse 21 für die Tragkraft in kN sind Hubkraft-Hubweg-Verläufe 22, 23 und 24 für einen Hubbalg mit einer Ausgangslänge von 100 mm und einem Wickelwinkel von 20° gezeigt. Man erkennt, dass die erreichbaren maximalen Verlängerungen des Hubbalges in Abhängigkeit vom Innendruck nochmals größer sind, als bei einem Fadenwinkel von 27,5°, nämlich

in Kurve 22 bei 4 bar etwa 54 mm,
in Kurve 23 bei 7 bar etwa 61 mm und
in Kurve 24 bei 8 bar etwa 64 mm.

Mit den erfindungsgemäßen Hubbälgen sind also bei einfacher und leichter Bauweise in Abhängigkeit vom Fadenwinkel große Hubhöhen erreichbar. Aufgrund der kompakten Bauweise ist auch nur ein geringer Einbauraum erforderlich.

**Bezugszeichenliste**

(Teil der Beschreibung)

| | |
|---|---|
| 1 | Hubbalg |
| 2 | Grundkörper des Hubbalges 1 |
| 3 | Abschlussdeckel |
| 3A | Absatz der Abschlussdeckel 3 |
| 4 | Spannring |
| 5 | Wand des Grundkörpers 2 |
| 6, 7 | Fadenlagen, Fäden der Fadenlagen |
| 8 | Fadenwinkel |
| 9 | Innenvolumen des Hubbalges 1 |
| 10 | Höhe des unbelasteten Hubbalges 1 |
| 11A, 11B | Wickelwinkel der Fadenlagen 6, 7 |
| 12 | Höhe des mit Druck beaufschlagten Hubbalges 1 |
| 13, 19 | Diagramme von Hubkraft-Hubweg-Verläufen erfindungsgemäßer Hubbälge 1 |
| 14, 20 | Höhenachse der Diagramme 13, 19 |
| 15, 21 | Tragkraftachse der Diagramme 13, 19 |
| 16, 17, 18 | Hubkraft-Hubweg-Verläufe bei einem Fadenwinkel von 27,5° |
| 22, 23, 24 | Hubkraft-Hubweg-Verläufe bei einem Fadenwinkel von 20° |

**Patentansprüche**

1.  Hubbalg (1), beispielsweise für Achsanhebevorrichtungen von Fahrzeugen,
    wobei der Hubbalg (1) mindestens einen schlauchförmigen elastomeren Grundkörper (2) mit einer elastomeren Matrix und in die elastomere Matrix eingebetteten Festigkeitsträger (6, 7), zwei Abschlussdeckel (3, 3A) und zwei Spannelemente (4) aufweist, wobei der Festigkeitsträger (6, 7) des Grundkörpers (2) aus mindestens zwei Fadenlagen (6, 7) aufgebaut ist, wobei jede Fadenlage (6, 7) in unbelastetem Zustand in einem Wickelwinkel (11A, 11B) bezüglich der Umfangsrichtung angeordnet ist, dessen Betrag kleiner als 35,3° ist, wobei beide Wickelwinkel (11B, 11B) nahezu denselben Betrag aber unterschiedlich Vorzeichen haben und dass die Abschlussdeckel (3, 3A) beidendig jeweils mit dem Grundkörper (2) mittels der Spannelemente (4) luftdicht verbunden sind.

2. Hubbalg (1) nach Anspruch 1, **dadurch gekennzeichnet, dass** der Wickelwinkel (11A, 11B) einen Betrag kleiner als 27,5° aufweist.

3. Hubbalg (1) nach Anspruch 2, **dadurch gekennzeichnet, dass** der Wickelwinkel (11A, 11B) einen Betrag kleiner oder gleich 20° aufweist.

**Claims**

1. Lifting bellows (1), for example for axle-lifting apparatuses of vehicles, wherein the lifting bellows (1) has at least one hose-shaped elastomer main body (2) with an elastomer matrix and has reinforcing supports (6, 7) embedded in the elastomer matrix, two end covers (3, 3A) and two clamping elements (4), wherein the reinforcing support (6, 7) of the main body (2) is built up from at least two thread plies (6, 7), wherein each thread ply (6, 7) is arranged, in the non-loaded state, at a winding angle (11A, 11B) with respect to the circumferential direction, the absolute value of which winding angle (11A, 11B) is less than 35.3°, wherein the two winding angles (11A, 11B) have virtually the same absolute value but different signs, and in that the end covers (3, 3A) are each connected at both ends to the main body (2) in an air-tight fashion by means of the clamping elements (4).

2. Lifting bellows (1) according to Claim 1, **characterized in that** the winding angle (11A, 11B) has an absolute value of less than 27.5°.

3. Lifting bellows (1) according to Claim 2, **characterized in that** the winding angle (11A, 11B) has an absolute value of less than or equal to 20°.

**Revendications**

1. Soufflet de levage (1), destiné par exemple à des dispositifs de levage d'essieux de véhicules, le soufflet de levage (1) comportant au moins un corps de base tubulaire (2) en élastomère pourvu d'une matrice en élastomère et des renforts (6, 7) noyés dans la matrice en élastomère, deux capots de fermeture (3, 3A) et deux éléments de serrage (4), le renfort (6, 7) du corps de base (2) comprenant au moins deux nappes de fils (6, 7), chaque nappe de fils (6, 7) étant disposée à l'état non chargé suivant un angle d'enroulement (11A, 11B) par rapport à la direction périphérique dont la valeur absolue est inférieure à 35,3°, les deux angles d'enroulement (11B, 11B) ayant à peu près la même valeur absolue mais des signes différents et les capots de fermeture (3, 3A) étant reliés de manière étanche à l'air, aux deux extrémités, au corps de base (2) au moyen des éléments de serrage (4).

2. Soufflet de levage (1) selon la revendication 1, **caractérisé en ce que** l'angle d'enroulement (11A, 11B) a une valeur absolue inférieure à 27,5°.

3. Soufflet de levage (1) selon la revendication 2, **caractérisé en ce que** l'angle d'enroulement (11A, 11B) a une valeur absolue inférieure ou égale à 20°.

# Fig. 1

# Fig. 2

# Fig. 3

## Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8816538 U1